# FASCICULE DE BREVET EUROPEEN

(11) **EP 4 326 945 B1**
(45) Date de publication et mention de la délivrance du brevet: **02.12.2026**
(21) Numéro de dépôt: 22724229.4
(22) Date de dépôt: 15.04.2022
(51) Int. Cl.: E01F 13/02, E04H 17/22, B62H 3/02

(54) **DISPOSITIF AMOVIBLE PERMETTANT LE STATIONNEMENT ÉPHÉMÈRE ET SÉCURISÉ DE BICYCLETTES**
ABNEHMBARE VORRICHTUNG ZUM TEMPORÄREN, SICHEREN PARKEN VON FAHRRÄDERN
REMOVABLE DEVICE FOR THE TEMPORARY BUT SECURE PARKING OF BICYCLES

(30) Priorité: 19.04.2021 FR 2104063
(43) Date de publication de la demande: 28.02.2024
(73) Titulaire: MICHAELIS, Charles Michel, 14000 Caen (FR)
(72) Inventeur: MICHAELIS, Charles Michel, 14000 Caen (FR)
(74) Mandataire: Degret, Jacques
(86) Numéro de dépôt international: PCT/FR2022/000034
(87) Numéro de publication internationale: WO 2022/223883

(56) Documents cités:
- BE-A- 628 576
- BE-A5- 1 014 735
- DE-U1- 8 711 425
- GB-A- 2 437 285
- JP-A- 2013 204 271
- KR-U- 980 003 262
- US-A- 614 826
- MADE IN: "VVS vindt spectaculaire fietsenstalling uit - Made in", 28 May 2019 (2019-05-28), pages 1 - 5, XP055862157, Retrieved from the Internet <URL:https://www.made-in.be/limburg/vvs-vindt-spectaculaire-fietsenstalling-uit/> [retrieved on 20211116]

## Description

### Domaine technique de l'invention

L'invention a trait à un dispositif amovible permettant, en coopération avec une rambarde ou une barrière existante, le stationnement éphémère des bicyclettes, ce stationnement étant néanmoins sécurisé dès lors que, si un voleur souhaitait dérober une des bicyclettes attachées au dispositif selon l'invention, il lui faudrait dérober l'ensemble "bicyclette + dispositif".

Or, cette situation paraît bien improbable car le dispositif amovible selon l'invention, s'il est de faible poids, est très encombrant en lui-même et s'avérerait donc être d'une gêne considérable pour le voleur si ce dernier s'imaginait pouvoir enfourcher la bicyclette et s'enfuir en emportant le dispositif avec lui tout en pédalant.

### Etat de la technique antérieur

Il est patent que l'utilisation de bicyclettes, souvent précédée de l'achat de celles-ci, est en nette augmentation, que ce soit pour des raisons économiques ou la conséquence de recherche d'une pratique sportive permettant de maintenir la bonne forme physique de leurs utilisateurs.

Il est donc de plus en plus fréquent qu'au cours de manifestations, sportives ou culturelles, par exemple des concerts, les spectateurs se déplacent jusqu'à ces points de manifestation avec leur bicyclette.

Lorsqu'ils sont arrivés à destination, le problème qui se pose alors à ces personnes est celui de la sécurisation de leur moyen de transport.

Il est par ailleurs bien connu que les bicyclettes font actuellement l'objet de perfectionnements multiples, et par conséquent leur prix ne cesse d'augmenter, mais même si la bicyclette dérobée est ancienne, et donc de peu de valeur, il est toujours désagréable pour son détenteur de constater que son moyen de transport a disparu, et ce que ce soit pour des raisons purement sentimentales ou plus simplement des raisons pratiques si le moyen de transport en cause lui est nécessaire au quotidien.

Il a donc été proposé divers dispositifs permettant le stationnement éphémère, mais pour autant sécurisé, de bicyclettes.

Toutefois, ces systèmes connus s'avèrent soit particulièrement volumineux (par exemple les casiers fermés par des verrous, qui au surplus ne permettent que le stationnement de peu de bicyclettes, ou encore le dispositif enseigné par la demande de brevet français n° 2.972.703 publiée le 21 septembre 2012), soit pour partie restant fixés à demeure, scellés au sol, constituant ainsi autant d'obstacles sur des surfaces horizontales, donc gênants pour la circulation (par exemple les dispositifs à arceaux, qui ont au surplus le défaut de ne garantir la fixation, donc la sécurisation, qu'à l'égard d'une seule roue de la bicyclette ainsi stationnée, ou encore le dispositif enseigné par la demande de brevet français n° 2.890.371 publiée le 9 mars 2007).

La présente invention a pour but de pallier de tels inconvénients en proposant un dispositif amovible, portatif et de faible poids, dispositif qui est donc d'un faible coût et qui peut être aisément manipulable aussi bien lors de son installation que lors de son enlèvement de son lieu d'utilisation lorsque la manifestation sportive ou culturelle est terminée.

Le seul impératif qu'impose le dispositif selon l'invention est celui de pouvoir être provisoirement fixé à un élément horizontal situé, relativement au sol, à une hauteur comprise entre environ 0,60 m et environ 1,50 m, de façon à pouvoir recevoir des moyens d'attache à une bicyclette par le cadre de celle-ci et non pas comme il est d'usage par l'une de ses deux roues.

En ce qu'elles comportent un tel élément horizontal, de nombreuses rambardes ou barrières permettent ainsi une telle fixation, et certaines d'entre elles d'ailleurs sont posées à demeure. Ces rambardes ou barrières existantes peuvent bien évidemment être exploitées telles quelles pour recevoir le dispositif selon l'invention. Toutefois, dans une application particulièrement avantageuse, il sera considéré que la barrière idéale est la barrière de sécurité dite "de police", encore dénommée "barrière Vauban" en France et "barrière Nadar" en Belgique.

Ces barrières généralement longues de 2,50 m et hautes de 1,10 m présentent en effet l'énorme avantage, de par leur structure et de par leur poids, d'être aisément mises en place et accrochées les unes aux autres en prévision de manifestations et tout aussi aisément retirées lorsque les manifestations sont terminées.

Autrement dit, les barrières de police correspondent exactement aux besoins souhaités conformément à l'invention, à savoir qu'elles constituent de par leur association entre elles des supports sécurisants, aptes à coopérer avec le dispositif amovible de l'invention, et que, simultanément, ces supports sont le plus souvent eux aussi éphémères.

La demande de brevet coréen KR 980 003 262 U publiée le 30 mars 1998 et le modèle d'utilité allemand G 87 11 425.9 publié le 8 octobre 1987 illustrent deux premiers types de barrière de sécurité convenables pour réaliser la coopération précitée avec le dispositif amovible selon l'invention. Le dispositif permettant le stationnement de bicyclettes de VVS (XP055862157) divulgue les caractéristiques du préambule de la revendication 1.

La demande de brevet français publiée le 6 juin 1980 sous le n° 2.441.046 illustre elle aussi une barrière de police et l'intérêt de ce document est qu'il décrit une barrière dont la structure est extrêmement proche des barrières de police dorénavant utilisées.

Son cadre vertical rectangulaire est constitué de tubes métalliques, à savoir un tube horizontal supérieur, un tube horizontal inférieur et deux tubes verticaux réunissant à leurs extrémités les deux tubes horizontaux, l'un de ces deux tubes verticaux étant équipé de deux accessoires, et l'autre étant lisse, libre de tout accessoire. Un tel cadre repose sur un piètement en deux parties disposées respectivement à proximité de chacune des extrémités de l'élément horizontal inférieur.

Entre les deux éléments horizontaux, et parallèlement aux éléments latéraux, des barreaux verticaux s'étendent à intervalle régulier, cet intervalle étant suffisant pour empêcher tout passage d'une personne entre deux barreaux consécutifs.

Dans la publication de 1980, le piètement était constitué de deux arceaux en forme de demi-cercles. Ces arceaux pouvaient aussi être en forme de U. Ils s'étendaient de part et d'autre du cadre vertical rectangulaire constituant la barrière à proprement parler.

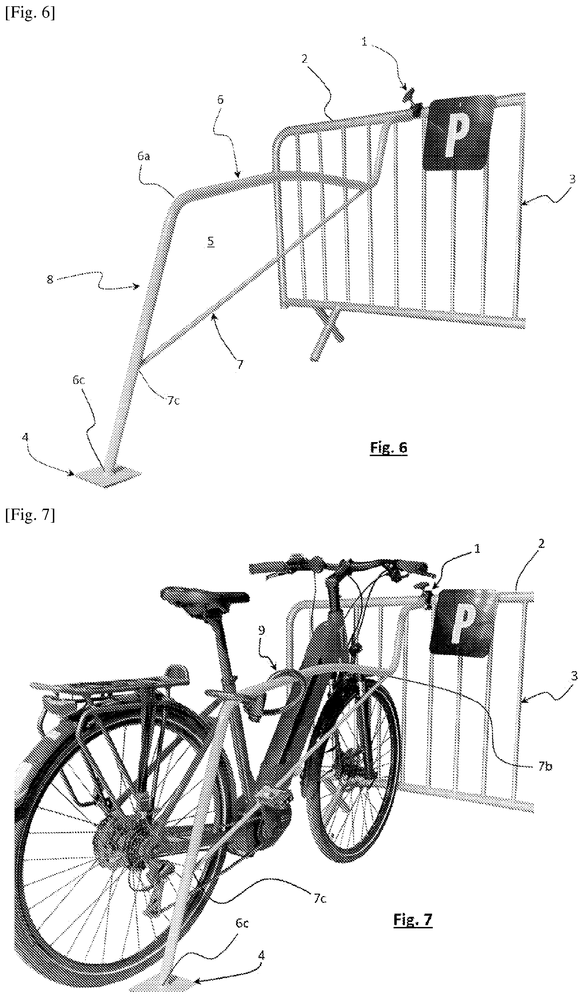

Dans les constructions actuelles (voir [Fig.6]), cette forme de piètement a été abandonnée au profit d'un piètement en deux parties également, chaque partie étant proche d'une extrémité de l'élément horizontal inférieur et étant constituée de deux béquilles de même longueur prenant naissance sur l'élément horizontal inférieur, à quelques centimètres l'une de l'autre, et s'étendant de façon inclinée et dans des directions opposées, cette fois encore de part et d'autre du cadre constituant la barrière.

Le tube latéral vertical du cadre de chaque barrière qui est équipé reçoit par soudures une fourche en forme de U ouverte vers l'extérieur, dans le prolongement du cadre, et un crochet dont l'extrémité libre est coudée en demi-cercle, fourche et crochet qui sont séparés en hauteur d'une distance d'environ 50 cm et sont aptes l'un comme l'autre à encadrer, avec un très léger jeu, et à accrocher le tube vertical latéral libre de la barrière identique voisine. Par tube latéral libre, il est rappelé qu'il faut comprendre celui des deux tubes latéraux qui est lisse, c'est-à-dire celui dépourvu des deux accessoires, fourche en U et crochet.

Outre leur légèreté, ces barrières ont l'avantage de pouvoir ainsi être associées et accrochées les unes aux autres et occuper alors diverses positions relatives, d'angle variable pouvant aller jusqu'à 320°.

Aussi, un assemblage de telles barrières peut être installé en quelques minutes (et démonté également en quelques minutes) et délimiter des espaces de formes éminemment variables, délimitations donc plus ou moins rectilignes, le long desquelles il paraît possible de placer des bicyclettes en appui verticalement sur leurs deux roues et selon des positions qui seront toujours sensiblement perpendiculaires à leur barrière d'appui.

C'est cette construction à l'aide de barrières de police qui, dans un souci de simplification, sera décrite à titre d'exemple préférentiel dans toute la suite de la description donnée du dispositif selon l'invention.

### Présentation de l'invention

La présente invention a donc pour objet un dispositif amovible permettant le stationnement éphémère mais sécurisé de bicyclettes dotées chacune d'un dispositif antivol le long de barrières, notamment de barrières de police, présentant un élément horizontal du type tube ou barre situé à une hauteur comprise entre environ 1,50 m et environ 0,60 m au-dessus du sol, ledit dispositif étant destiné à coopérer avec lesdites barrières et étant remarquable en ce qu'il comprend à sa partie avant des moyens permettant sa fixation provisoire à l'élément horizontal d'une barrière et à sa partie arrière des moyens permettant son appui au sol, en ce qu'il comprend en outre deux tubes métalliques soudés l'un à l'autre en au moins deux points et appartenant alors à un plan sensiblement vertical et sensiblement perpendiculaire à l'élément horizontal de la barrière, l'un au moins de ces deux tubes étant coudé de sorte à définir avec l'autre tube un cadre sensiblement vertical fermé, l'un au moins de ces deux tubes étant destiné à coopérer avec le dispositif antivol dont sont dotées les bicyclettes, en ce qu'une extrémité d'au moins l'un des deux tubes est solidaire des moyens d'appui au sol, et en ce que soit l'autre extrémité de ce tube, soit une extrémité de l'autre tube, est solidaire des moyens de fixation provisoire.

Ainsi, le but du dispositif selon l'invention est de pouvoir, à titre éphémère, et à l'aide d'un antivol traditionnel, attacher à l'élément horizontal d'une barrière, fixe ou du moins encombrante, au moins une bicyclette par son cadre et non pas, comme il est d'usage, par l'une de ses deux roues, soit la roue arrière, soit plus commodément la roue avant. En effet, ce dernier mode d'attache n'est pas sécurisant, même s'il est effectué autour d'un poteau fixe, d'un poteau électrique ou d'un arbre, dès lors qu'il suffit au voleur de desserrer les fixations de la roue sur la fourche correspondante de la bicyclette pour s'emparer de cette dernière, en ne laissant derrière lui que la roue attachée au poteau ou à l'arbre par l'antivol.

Or, aucune des barrières de sécurité objets de l'une quelconque des demandes de brevet ou de modèle d'utilité précitées ne permet par elle-même, c'est-à-dire à elle seule, d'attacher, perpendiculairement à ladite barrière, une bicyclette par son cadre à l'aide d'un antivol traditionnel car celui-ci s'avérerait d'une longueur insuffisante.

Et, quand bien même, la longueur de l'antivol serait augmentée et suffisante pour attacher le cadre de la bicyclette au piètement de la barrière de sécurité, il suffirait au voleur de soulever ladite barrière à son extrémité recevant l'antivol, et de pouvoir ainsi dégager l'antivol du piètement pour ensuite s'emparer de la bicyclette, et cette fois dans sa totalité puisque plus aucune partie de la bicyclette ne se trouvera alors reliée à la barrière de sécurité.

Ce n'est donc qu'au niveau des tubes verticaux latéraux de la barrière que l'on peut attacher une bicyclette, par son cadre, au cadre de ladite barrière. Cette disposition n'a toutefois que très peu d'intérêt puisqu'elle limite considérablement le nombre de bicyclettes pouvant être ainsi attachées à une barrière, à deux si la barrière est isolée, à une tout au plus si la barrière est associée à des barrières voisines.

Autrement dit, les barrières de sécurité décrites dans les documents susmentionnés ne sont pas destinées à être utilisées par elles-mêmes comme parkings à bicyclettes, avec la sécurisation recherchée et obtenue par le dispositif amovible selon l'invention. D'ailleurs, leurs descriptions ne font jamais état de cette affectation.

Le dispositif selon l'invention a donc l'avantage, relativement aux dispositions d'attache possibles sur les barrières de sécurité connues, de permettre la sécurisation par leurs cadres d'environ une douzaine de bicyclettes sur chaque barrière, ces bicyclettes étant alors disposées perpendiculairement à la barrière, de part et d'autre de celle-ci.

Dans une première variante de réalisation, les deux extrémités d'un même tube dudit dispositif sont solidaires pour l'une des moyens de fixation provisoire et pour l'autre des moyens d'appui au sol.

Dans une seconde variante de réalisation, une extrémité de l'un des tubes du dispositif est solidaire des moyens de fixation provisoire et une extrémité de l'autre tube dudit dispositif est solidaire des moyens d'appui au sol.

Selon les constructions, le cadre fermé est soit un quadrilatère, soit un triangle.

Selon encore des choix de construction, les deux tubes constituant le cadre vertical fermé sont d'un même diamètre ou sont de diamètres différents.

Dans la seconde des deux hypothèses précitées, celui des deux tubes qui surplombe l'autre tube et qui est destiné à recevoir les dispositifs antivol des bicyclettes, par exemple une chaîne et son cadenas, un câble et son cadenas ou un anti-vol en U, est d'un diamètre supérieur à celui de l'autre tube.

Afin d'améliorer la stabilité du dispositif selon l'invention, ses moyens d'appui au sol peuvent être constitués d'une platine.

Dans ce dernier cas, très avantageusement, la platine peut être fixée au sol de manière provisoire.

### Brève description des dessins

L'invention sera mieux comprise et d'autres caractéristiques et avantages appa-raitront plus clairement à la lecture de la description donnée ci-après à titre d'exemple, en référence aux dessins annexés dans lesquels :
[Fig.1], [Fig.2], [Fig.3], [Fig.4] illustrent diverses variantes de réalisation du dispositif selon l'invention.
[Fig.5] est une vue d'une des variantes préférentielles dans laquelle sont représentés tous les éléments constitutifs du dispositif selon l'invention.
[Fig.6] illustre l'utilisation du dispositif selon l'invention en coopération avec une barrière de police qui, pour sa part, n'est représentée que pour partie.
[Fig.7] est une vue identique à celle de la [Fig.6] illustrant le stationnement d'une bicyclette en association avec le dispositif selon l'invention.
[Fig.8], [Fig.9] illustrent un exemple de moyens de fixation provisoire du dispositif selon l'invention sur l'élément horizontal supérieur d'une barrière de police.

### Description des modes de réalisation préférés

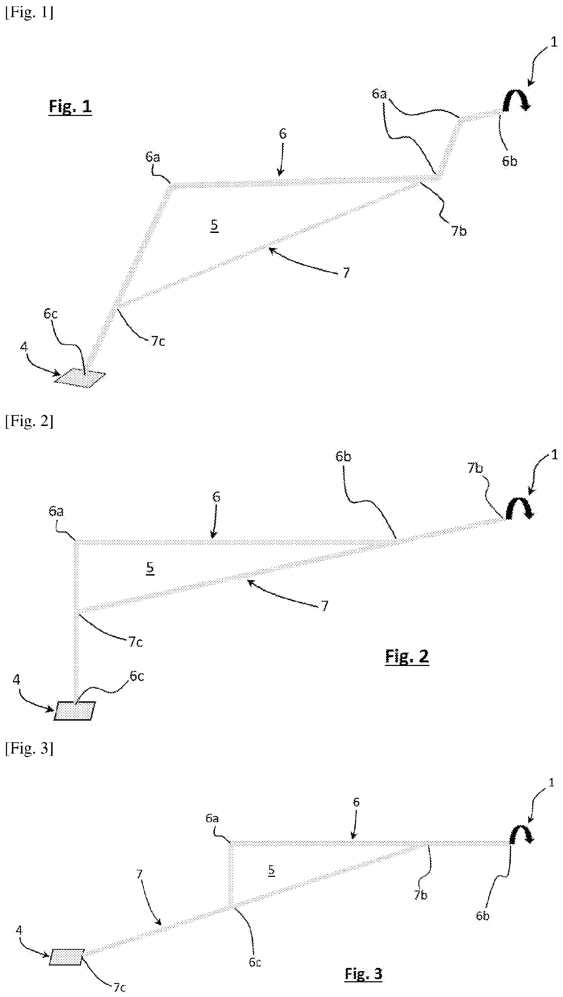

Les figures 1 à 4 illustrent diverses variantes de réalisation du dispositif selon l'invention permettant le stationnement éphémère et sécurisé de bicyclettes, ces variantes ayant toutes en commun le fait que ledit dispositif selon l'invention comprend à sa partie avant des moyens 1 permettant sa fixation provisoire à l'élément horizontal supérieur 2 de la barrière de police 3 et à sa partie arrière des moyens 4 permettant son appui au sol.

Pour chacune des variantes de réalisation représentées dans les figures 1 à 4, le dispositif selon l'invention comprend en outre des tubes métalliques soudés l'un à l'autre en au moins deux points et ayant des formes et dispositions appropriées afin de relier les moyens de fixation 1 et les moyens d'appui au sol 4.

Ainsi, les deux tubes métalliques appartiennent alors à un plan sensiblement vertical et sensiblement perpendiculaire à l'élément horizontal 2 de la barrière 3, l'un au moins des deux tubes précités présentant un ou plusieurs coudes, de sorte à définir avec l'autre tube un cadre 5 sensiblement vertical fermé.

C'est la formation de ce cadre fermé qui constitue avec les moyens 1 et 4 le cœur de l'invention.

Dans la variante de la [Fig.1], le tube supérieur 6 est coudé selon 6a en plusieurs endroits de sorte que ses deux extrémités avant 6b et respectivement arrière 6c sont solidaires, la première des moyens avant 1 de fixation provisoire et la seconde des moyens arrière 4 d'appui au sol.

Le second tube 7, soudé à ses deux extrémités 7b et 7c sous le tube 6, définit avec ce dernier un cadre fermé 5 qui est alors un triangle.

Dans la variante de la [Fig.2], le tube supérieur 6, qui présente un seul coude 6a, est tel que son extrémité inférieure arrière 6c est solidaire des moyens 4.

C'est alors le tube inférieur 7 et plus précisément son extrémité avant 7b qui est associée aux moyens 1 de fixation provisoire.

L'extrémité supérieure 6b du tube 6 est soudée au tube 7 à distance de ses extrémités 7b et 7c et l'extrémité 7c du tube 7 est soudée au tube 6 entre le coude 6a et son extrémité 6c.

Le cadre fermé 5 ainsi constitué est également un triangle.

Dans la variante de la [Fig.3], le tube supérieur 6 présente un seul coude 6a et son extrémité supérieure 6b est solidaire des moyens avant 1 de fixation provisoire.

C'est alors le tube inférieur 7 et plus précisément son extrémité arrière 7c qui est associée aux moyens arrière 4 d'appui au sol.

L'extrémité inférieure 6c du tube 6 est soudée au tube 7 à distance des extrémités 7c et 7b et l'extrémité 7b du tube 7 est soudée au tube 6 entre son coude 6a et son extrémité avant 6b.

Le cadre fermé 5 ainsi constitué est là également encore un triangle.

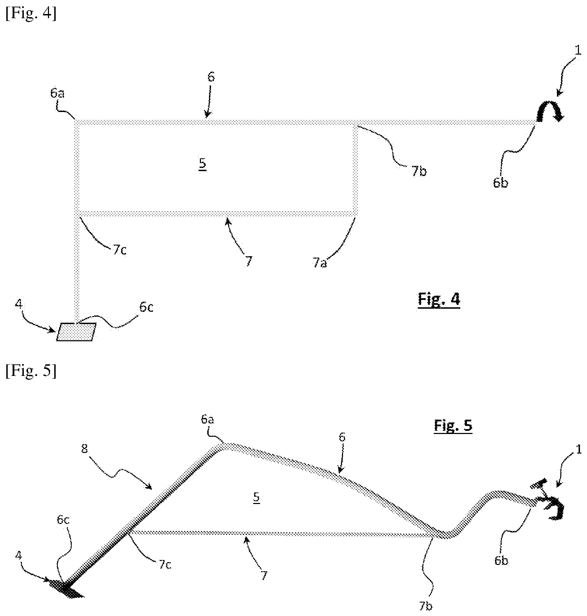

Dans la variante de la [Fig.4], le tube supérieur 6 est coudé selon 6a en au moins un endroit de sorte que ses deux extrémités 6b et respectivement 6c puissent être solidaires, la première des moyens avant 1 de fixation provisoire et la seconde des moyens arrière 4 d'appui au sol.

Le second tube 7, soudé à ses deux extrémités 7b et 7c sous le tube 6, est coudé en au moins un endroit 7a de façon à définir avec le tube 6 un cadre fermé 5 ayant la forme d'un quadrilatère.

Bien évidemment, en fonction du nombre de coudes 6a du tube 6 et/ou de coudes 7a du tube 7, le cadre fermé 5 obtenu peut comprendre si nécessaire plus de quatre côtés.

Il a été représenté à la [Fig.5] la variante préférentielle du dispositif 8 conforme à l'invention, dispositif plus particulièrement adapté aux barrières de police.

Dans ce dispositif 8, le tube supérieur est coudé en trois endroits afin que son extrémité avant 6b, dotée de moyens de fixation 1, soit située à environ 1,10 m au-dessus du sol et coopère ainsi étroitement avec l'élément horizontal supérieur 2 de la barrière de police 3.

Si la barrière devait être en fait une rambarde située entre 1,50 m et 0,60 m au-dessus du sol, il est clair que le tube 6 fera alors l'objet d'une mise à mesure en réduisant ou en augmentant le nombre de coudes 6a et en augmentant ou en réduisant les distances séparant deux coudes 6a consécutifs.

Dans le dispositif 8, c'est le tube supérieur 6 qui sera le plus particulièrement destiné à coopérer avec le dispositif antivol 9 dont sont dotées les bicyclettes, qu'il s'agisse par exemple d'une chaîne et d'un cadenas, d'un câble et d'un cadenas ou encore d'un antivol en U.

Le tube inférieur 7 a un rôle qui est double, celui d'améliorer la résistance mécanique du dispositif 8, notamment en évitant sa torsion, et celui de définir un cadre fermé 5, en l'occurrence un triangle dont l'un des côtés est arrondi.

Le fait que le cadre 5 soit fermé empêche en effet qu'une personne indélicate souhaitant dérober une bicyclette fixée par l'antivol 9, lui-même attaché au tube 6, puisse faire coulisser ledit antivol le long du tube 6 jusqu'à le dégager dudit tube et puisse ainsi libérer la bicyclette du dispositif 8.

Il est à noter que le résultat recherché serait exactement le même si l'utilisateur venait à placer son antivol autour du tube 7.

Il est également à noter que, dans les exemples des [Fig.1], [Fig.4] et [Fig.5], les moyens avant 1 de fixation provisoire du dispositif selon l'invention et les moyens arrière 4 d'appui au sol sont disposés aux extrémités d'un même tube, le tube supérieur 6 en l'occurrence, et que, dans les exemples des [Fig.2], [Fig.3], les moyens 1 et 4 précités sont disposés pour les uns à l'extrémité du tube 6 et pour les autres à l'extrémité du tube 7. Bien évidemment, on imagine aisément une construction dans laquelle les moyens 1 et 4 précités seraient disposés aux deux extrémités du tube dit inférieur 7. Pour exemple, il suffirait d'intervertir les extrémités 6b et 7b sur le schéma de la [Fig.3].

Afin d'améliorer la stabilité du dispositif selon l'invention, le moyen d'appui au sol peut être constitué d'une platine et cette dernière peut être au surplus fixée au sol de manière provisoire de sorte que l'on puisse dégager le dispositif 8 du terrain lorsqu'il n'a plus d'utilité et, par exemple, lorsque la manifestation est terminée.

Pour ce qui concerne la fixation provisoire du dispositif 8 à l'élément supérieur horizontal 2 de la barrière de police 3 ou à une rambarde quelconque, il est possible d'utiliser différents colliers de serrage ou différentes pinces de serrage du commerce.

Ce moyen de serrage sera avantageusement en caoutchouc ou en matière plastique de sorte à ne pas griffer et laisser ainsi des marques dans la barrière de police.

Pour exemple, on pourrait utiliser des pinces de serrage commercialisés par les sociétés Prozic, Levenly, KKMark ou encore la pince Global Truss 812 - B Half Coupler de la société Thomann.

En fait, les pinces de serrage des éclairages utilisés dans le milieu du spectacle conviennent parfaitement.

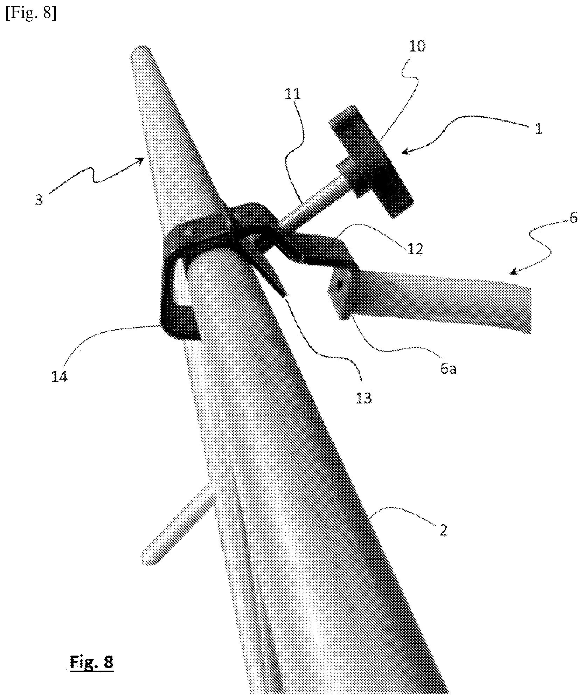

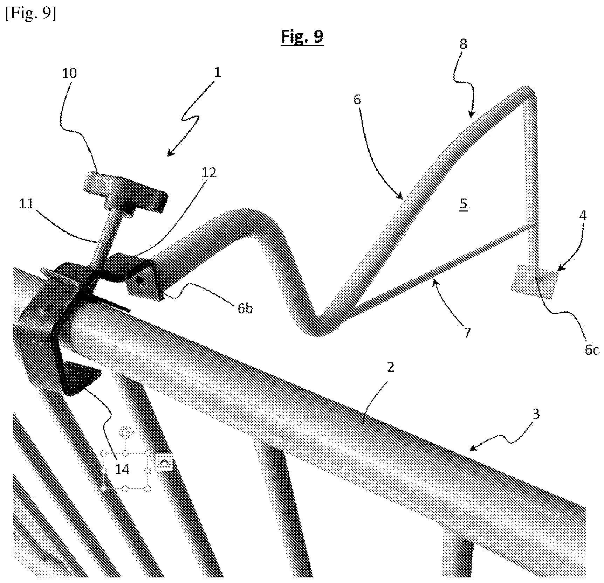

Ainsi la pince représentée plus en détail aux figures 8 et 9 comprend deux bandes de caoutchouc appliquées et soudées l'une sur l'autre, bandes dont les extrémités libres viennent avant usage envelopper partiellement l'élément supérieur 2 de la barrière 3.

Un écrou papillon ou un volant 10 est associé à une tige filetée 11 qui traverse la bande 12 et s'appuie à proximité de l'extrémité de l'autre bande 13.

Un serrage rapide permet de rapprocher l'extrémité 13 de la première bande de l'autre extrémité 14 de la seconde bande et donc d'enserrer fermement le moyen 1 de fixation provisoire sur l'élément 2.

Il est à noter qu'outre sa simplicité de fabrication, sa simplicité de pose et de dépose, ses propriétés de légèreté et néanmoins de robustesse, le dispositif selon l'invention a pour autre avantage de permettre le stationnement sécurisé de deux bicyclettes disposées avec leur antivol d'un côté et de l'autre du dispositif lorsque celui-ci est associé à la barrière de police ou à une quelconque rambarde.

Un exemple de construction du dispositif selon l'invention particulièrement adapté aux fins d'une fixation à l'élément supérieur d'une barrière de police, donc d'une hauteur hors tout de 1,10 m pourrait être réalisé conformément à la [Fig.5] avec un tube supérieur 6 de 2,3 cm de diamètre, dont les longueurs entre extrémités et coudes seraient successivement, de l'avant vers l'arrière, d'environ 0,15 m, 0,20 m, 0,90 m et 0,80 m, et un tube inférieur 7 de 0,9 cm de diamètre et d'une longueur d'environ 1,15 m. Un tel dispositif aurait une longueur hors tout voisine de 1,90 m. La platine 4 serait alors par exemple un carré de 12 cm de côté.

Si l'invention a été décrite et représentée en liaison avec une barrière de police, il est clair qu'elle s'applique à toute autre forme de barrière. Ainsi, dans sa construction la plus simple, cette dernière pourrait être réalisée à l'aide d'une barre horizontale dont chacune des deux extrémités est fixée à un poteau profondément enfoncé ou lui-même fixé au sol.

## Revendications

1. Dispositif amovible (8) permettant le stationnement éphémère mais sécurisé de bicyclettes dotées chacune d'un dispositif antivol (9) le long de barrières (3), notamment de barrières de police, présentant un élément horizontal (2) du type tube ou barre situé à une hauteur comprise de préférence entre 1,50 m et 0,60 m au-dessus du sol, ledit dispositif amovible étant destiné à coopérer avec lesdites barrières et étant **caractérisé en ce qu'**il comprend à sa partie avant des moyens (1) permettant sa fixation provisoire à l'élément horizontal (2) de la barrière (3) et à sa partie arrière des moyens (4) permettant son appui au sol, **en ce qu'**il comprend en outre deux tubes métalliques (6, 7) soudés l'un à l'autre en au moins deux points et appartenant alors à un plan sensiblement vertical et sensiblement perpendiculaire à l'élément horizontal (2) de la barrière, l'un au moins de ces deux tubes (6, 7) étant coudé (6a, 7a) de sorte à définir avec l'autre tube (7, 6) un cadre (5) sensiblement vertical fermé, l'un au moins de ces deux tubes (6, 7) étant destiné à coopérer avec le dispositif antivol (9) dont sont dotées les bicyclettes, **en ce qu'**une extrémité d'au moins l'un des deux tubes (6, 7) est solidaire des moyens (4) d'appui au sol, et **en ce que** soit l'autre extrémité de ce tube, soit une extrémité de l'autre tube, est solidaire des moyens (1) de fixation provisoire.

2. Dispositif amovible selon la revendication 1 **caractérisé en ce que** les deux extrémités (6b, 6c ; 7b, 7c) d'un même tube (6, 7) sont solidaires pour l'une des moyens (1) de fixation provisoire, et pour l'autre des moyens (4) d'appui au sol.

3. Dispositif amovible selon la revendication 1 **caractérisé en ce qu'**une extrémité (6b ; 7b) de l'un des tubes (6 ; 7) est solidaire des moyens (1) de fixation provisoire et une extrémité (6c ; 7c) de l'autre tube (7 ; 6) est solidaire des moyens (4) d'appui au sol.

4. Dispositif amovible selon l'une quelconque des revendications 1 à 3 **caractérisé en ce que** le cadre fermé (5) est un quadrilatère.

5. Dispositif amovible selon l'une quelconque des revendications 1 à 3 **caractérisé en ce que** le cadre fermé (5) est un triangle.

6. Dispositif amovible selon l'une quelconque des revendications 1 à 5 **caractérisé en ce que** les deux tubes (6, 7) constituant le cadre vertical fermé (5) sont d'un même diamètre.

7. Dispositif amovible selon l'une quelconque des revendications 1 à 5 **caractérisé en ce que** les deux tubes (6, 7) constituant le cadre vertical fermé (5) sont de diamètres différents.

8. Dispositif amovible selon la revendication 7 **caractérisé en ce que** celui (6) des deux tubes qui surplombe l'autre tube (7) et qui est destiné à recevoir les dispositifs antivol (9) des bicyclettes, par exemple une chaîne et son cadenas, un câble et son cadenas ou un antivol en U, est d'un diamètre supérieur à celui de l'autre tube (7).

9. Dispositif amovible selon les revendications 1 à 8 **caractérisé en ce que** les moyens (4) d'appui au sol sont constitués d'une platine.

10. Dispositif amovible selon la revendication 9 **caractérisé en ce que** la platine est fixée au sol de manière provisoire.

## Patentansprüche

1. Abnehmbare Vorrichtung (8), die das vorübergehende, jedoch gesicherte Abstellen von Fahrrädern ermöglicht, die jeweils mit einer Diebstahlsicherung (9) ausgestattet sind, und zwar entlang von Absperrungen (3), insbesondere Polizeiabsperrungen, die ein horizontales rohr- oder stabförmiges Element (2) aufweisen, das sich vorzugsweise in einer Höhe zwischen 1,50 m und 0,60 m über dem Boden befindet, wobei die abnehmbare Vorrichtung dazu bestimmt ist, mit den Absperrungen zusammenzuwirken, und **dadurch gekennzeichnet ist, dass** sie in ihrem vorderen Bereich Mittel (1) aufweist, die ihre vorübergehende Befestigung an dem horizontalen Element (2) der Absperrung (3) ermöglichen, und in ihrem hinteren Bereich Mittel (4) aufweist, die ihre Abstützung auf dem Boden ermöglichen, und dass sie ferner zwei Metallrohre (6, 7) umfasst, die an mindestens zwei Stellen miteinander verschweißt sind und dabei in einer im Wesentlichen vertikalen und im Wesentlichen senkrecht zu dem horizontalen Element (2) der Absperrung verlaufenden Ebene liegen, wobei mindestens eines der beiden Rohre (6, 7) derart gebogen ist (6a, 7a), dass es zusammen mit dem jeweils anderen Rohr (7, 6) einen im Wesentlichen vertikalen geschlossenen Rahmen (5) bildet, wobei mindestens eines der beiden Rohre (6, 7) dazu bestimmt ist, mit der Diebstahlsicherung (9), mit der die Fahrräder ausgestattet sind, zusammenzuwirken, wobei ein Ende mindestens eines der beiden Rohre (6, 7) mit den Mitteln (4) zum Abstützen auf dem Boden verbunden ist und entweder das andere Ende dieses Rohrs oder ein Ende des jeweils anderen Rohrs mit den Mitteln (1) zur vorübergehenden Befestigung verbunden ist.

2. Abnehmbare Vorrichtung nach Anspruch 1, **dadurch gekennzeichnet, dass** die beiden Enden (6b, 6c; 7b, 7c) ein und desselben Rohrs (6, 7) zum einen mit den Mitteln (1) zur vorübergehenden Befestigung und zum anderen mit den Mitteln (4) zum Abstützen auf dem Boden verbunden sind.

3. Abnehmbare Vorrichtung nach Anspruch 1, **dadurch gekennzeichnet, dass** ein Ende (6b; 7b) eines der Rohre (6; 7) mit den Mitteln (1) zur vorübergehenden Befestigung verbunden ist und ein Ende (6c; 7c) des jeweils anderen Rohrs (7; 6) mit den Mitteln (4) zum Abstützen auf dem Boden verbunden ist.

4. Abnehmbare Vorrichtung nach einem der Ansprüche 1 bis 3, **dadurch gekennzeichnet, dass** der geschlossene Rahmen (5) ein Viereck bildet.

5. Abnehmbare Vorrichtung nach einem der Ansprüche 1 bis 3, **dadurch gekennzeichnet, dass** der geschlossene Rahmen (5) ein Dreieck bildet.

6. Abnehmbare Vorrichtung nach einem der Ansprüche 1 bis 5, **dadurch gekennzeichnet, dass** die beiden Rohre (6, 7), die den geschlossenen vertikalen Rahmen (5) bilden, den gleichen Durchmesser aufweisen.

7. Abnehmbare Vorrichtung nach einem der Ansprüche 1 bis 5, **dadurch gekennzeichnet, dass** die beiden Rohre (6, 7), die den geschlossenen vertikalen Rahmen (5) bilden, unterschiedliche Durchmesser aufweisen.

8. Abnehmbare Vorrichtung nach Anspruch 7, **dadurch gekennzeichnet, dass** dasjenige der beiden Rohre (6), das über dem anderen Rohr (7) verläuft und dazu bestimmt ist, die Diebstahlsicherungen (9) der Fahrräder aufzunehmen, beispielsweise eine Kette mit ihrem Vorhängeschloss, ein Kabel mit seinem Vorhängeschloss oder ein Bügelschloss, einen größeren Durchmesser als das andere Rohr (7) aufweist.

9. Abnehmbare Vorrichtung nach einem der Ansprüche 1 bis 8, **dadurch gekennzeichnet, dass** die Mittel (4) zum Abstützen auf dem Boden aus einer Platte bestehen.

10. Abnehmbare Vorrichtung nach Anspruch 9, **dadurch gekennzeichnet, dass** die Platte vorübergehend am Boden befestigt ist.

## Claims

1. Removable device (8) for the temporary yet secure parking of bicycles, each provided with an anti-theft device (9), along barriers (3), in particular crowd-control barriers, having a horizontal member (2) in the form of a tube or bar positioned at a height preferably between 0.60 m and 1.50 m above the ground, said removable device being configured to cooperate with said barriers and being **characterised in that** it comprises, at a front portion thereof, means (1) for temporarily securing it to the horizontal member (2) of the barrier (3) and, at a rear portion thereof, means (4) for supporting it on the ground, **in that** it further comprises two metal tubes (6, 7) welded to one another at at least two points and thereby lying in a substantially vertical plane substantially perpendicular to the horizontal member (2) of the barrier, at least one of said two tubes (6, 7) being bent (6a, 7a) so as to define, together with the other tube (7, 6), a substantially vertical closed frame (5), at least one of said two tubes (6, 7) being configured to cooperate with the anti-theft device (9) provided on each bicycle, **in that** one end of at least one of the two tubes (6, 7) is integral with the ground-support means (4), and **in that** either the other end of said tube or one end of the other tube is integral with the temporary securing means (1).

2. Removable device according to claim 1, **characterised in that** the two ends (6b, 6c; 7b, 7c) of the same tube (6, 7) are integral respectively with the temporary securing means (1) and with the ground-support means (4).

3. Removable device according to claim 1, **characterised in that** one end (6b; 7b) of one of the tubes (6; 7) is integral with the temporary securing means (1), and one end (6c; 7c) of the other tube (7; 6) is integral with the ground-support means (4).

4. Removable device according to any one of claims 1 to 3, **characterised in that** the closed frame (5) is a quadrilateral.

5. Removable device according to any one of claims 1 to 3, **characterised in that** the closed frame (5) is a triangle.

6. Removable device according to any one of claims 1 to 5, **characterised in that** the two tubes (6, 7) forming the closed vertical frame (5) have the same diameter.

7. Removable device according to any one of claims 1 to 5, **characterised in that** the two tubes (6, 7) forming the closed vertical frame (5) have different diameters.

8. Removable device according to claim 7, **characterised in that** the tube (6) which is positioned above the other tube (7) and is configured to receive the bicycle anti-theft devices (9), for example a chain and padlock, a cable and padlock, or a U-lock, has a diameter greater than that of the other tube (7).

9. Removable device according to any one of claims 1 to 8, **characterised in that** the ground-support means (4) comprise a base plate.

10. Removable device according to claim 9, **characterised in that** the base plate is temporarily secured to the ground.
